# EUROPEAN PATENT APPLICATION

(11) **EP 3 364 535 A1**
(43) Date of publication of application: **22.08.2018**
(21) Application number: 16854980.6
(22) Date of filing: 17.10.2016
(51) Int. Cl.: H02M 1/14

(54) **SELF-COUPLED POWER SOURCE RIPPLE SUPPRESSION CIRCUIT AND METHOD**

(30) Priority: 16.10.2015 CN 201510672584
(71) Applicant: Delight Innovative Technologies Limited, Admiralty, Hong Kong (CN)
(72) Inventor: YAU, Kin Hing, Kowloon Hong Kong (CN)
(74) Representative: Keil & Schaafhausen Patent- und Rechtsanwälte PartGmbB
(86) International application number: PCT/CN2016/102282
(87) International publication number: WO 2017/063605

(57) **Abstract**

The invention provides a self-coupled power supply ripple rejection circuit and method, the circuit includes a coupled inductor, a balanced capacitor, an input capacitor and an output capacitor. The coupled inductor includes a first inductor and a second inductor coupled to each other and wound around a same magnetic core, a dotted terminal of the first inductor and one end of the input capacitor are both connected to a power supply input end, a dotted terminal of the second inductor is connected to one end of the balanced capacitor, and the other end of the first inductor, the other end of the second inductor and one end of the output capacitor are all connected to the power supply output end, and the other end of the balanced capacitor, the other end of the input capacitor and the other end of the output capacitor are all grounded. The invention adopts a special inductor-coupled inductor, cooperated with a balanced capacitor to achieve high reliability and high efficiency power supply ripple rejection. At the same time, the circuit volume is reduced, the circuit loss and the product cost are reduced, and the requirements of environmental protection and pollution-free are met.

## Description

### Technology Field

The invention relates to the technical field of power supply ripple rejection, and in particular relates to a self-coupled power supply ripple rejection circuit and method.

### Background technique

A driving power supply (e.g. a LED driving power supply) refers to a power converter that converts a power supply (e.g. high voltage industrial frequency AC, ie, mains, low voltage and high frequency AC, such as the output of an electronic transformer, etc.) into a specific voltage and current to drive a device or apparatus (e.g. a LED lighting).. There are a large number of power supply ripples in the supplied power supply, including high-speed, large-signal voltage and current waveforms that can be coupled to probes, in particular including a magnetic field coupled from a power transformer, an electric field coupled from an switching node, and a common-mode current resulted from transformer mutual winding capacitance, power supply ripple can cause unstable operation of the device, apparatus, or chip being driven, and long-term instability can easily damage the device, apparatus or chip being driven, therefore, in practice, a power supply ripple rejection circuit is usually used for suppressing voltage and current ripple in the power supply.

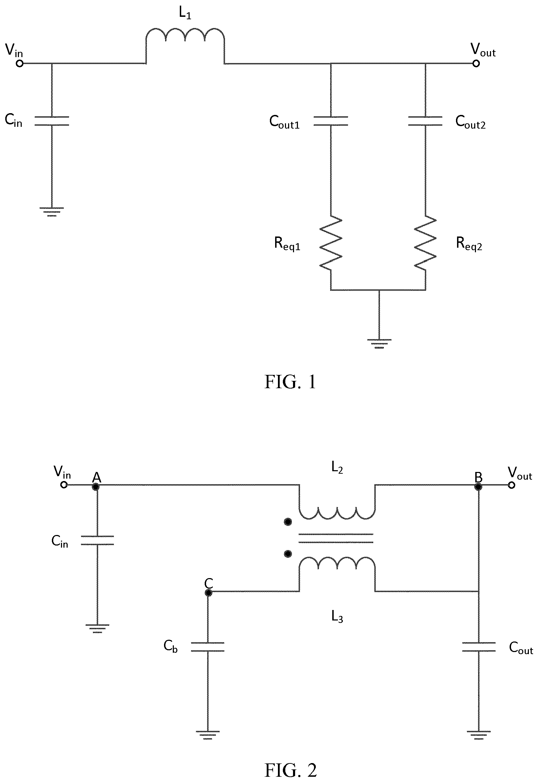

The traditional power supply ripple rejection circuit uses inductor-capacitor filter , to obtain a smaller ripple effect, the structure diagram is shown in Figure 1, the circuit comprises an inductor L₁, an input capacitor Cᵢₙ, and two output capacitors Cₒᵤₜ₁ and Cₒᵤₜ₂, and one end of the inductor L₁ and one end of the input capacitor Cᵢₙ are connected to the power supply input terminal Vᵢₙ, the other end of the inductor L₁, one end of the output capacitor Cₒᵤₜ₁, and one end of the output capacitor Cₒᵤₜ₂ are all connected to the output Vₒᵤₜ of the power supply. , the other end of the input capacitor Cᵢₙ, the other end of the output capacitor Cₒᵤₜ₁ and the other end of the output capacitor Cₒᵤₜ₂are all grounded, wherein a resistance R_{eq1} and a resistance R_{eq2} are respectively equivalent resistances of the output capacitor Cₒᵤₜ₁ and the output capacitor Cₒᵤₜ₂. The traditional power supply ripple rejection is usually a method using an inductor (such as the inductor L₁ shown in Figure 1) and a large capacitor (such as the two parallel output capacitors Cₒᵤₜ₁ and Cₒᵤₜ₂shown in Figure 1). In FIG. 1, device parameters in the circuit configuration is as follows: the range of the inductance value of the inductance L₁ is approximately 470µH to 2200µH ; electrolytic capacitors are commonly used for the output capacitors Cₒᵤₜ₁ and Cₒᵤₜ₂, a capacitance value of 2 × 4700µF, although the electrolytic capacitors have advantages of large capacitance and high capacitance density, electrolytic capacitors have disadvantages of large internal resistance, high energy consumption, easy electrolyte contamination and easy to cause safety problems, and are bulky and costly. and having a large equivalent resistance (FIG. 1 are shown in the output capacitor Cₒᵤₜ₁ and Cₒᵤₜ₂ series of two resistances R_{eq1} and R_{eq2}), at the time of charging and discharging circuit easily lead to a large loss . If an electrolytic capacitor is not used, i.e. a capacitor with such a large capacitance value is not used, a sufficiently large inductance such as an inductance of 470,000 µ H is required, but the inductance is very large, resulting in an increase in the size and cost of the circuit and the entire product. In summary, the traditional power supply ripple rejection circuit cannot meet the requirements of small size, low cost, low loss, and environmental protection without pollution while achieving high reliability and high efficiency of power supply driving.

### Summary of the Invention

The invention proposes a self-coupled power supply ripple rejection circuit for the problems of existing power supply ripple rejection circuit that uses electrolytic capacitors to cause the circuit to be bulky, high in cost, high in loss and easily cause pollution, a specific inductor-Coupled inductor, cooperated with a balanced capacitor, provide high reliability and high efficiency power supply ripple rejection while reducing circuit size and circuit losses, and meeting requirements of product cost and environmental pollution-free. The invention also relates to a self-coupled power supply ripple rejection method.

The technical solution of the invention is as follows:
A self-coupled power supply ripple rejection circuit comprises a coupled inductor, a balanced capacitor, an input capacitor and an output capacitor, the coupled inductor comprises a first inductor and a second inductor coupled to each other and wound around a same magnetic core, a dotted terminal of the first inductor and one end of the input capacitor are both connected to a power supply input end, a dotted terminal of the second inductor is connected to one end of the balanced capacitor, and the other end of the first inductor, the other end of the second inductor and one end of the output capacitor are all connected to the power supply output end, and the other end of the balanced capacitor, the other end of the input capacitor and the other end of the output capacitor are all grounded.

The inductance of the first inductor is less than or equal to 470 µH.

A square of a ratio of an inductance of the second inductor to an inductance of the first inductor is equal to a coupling coefficient of the two inductors.

The balanced capacitor, the input capacitor and the output capacitor are all non-electrolytic capacitors.

The capacitance of the balanced capacitor ranges from 100 pF to 900 pF.

The capacitance of the output capacitor is less than or equal to 10 µF.

A self-coupled power supply ripple rejection method, characterized in that a coupled inductor is arranged between an input end and an output end of a power supply, and the coupled inductor includes a first inductor and a second inductor coupled to each other and wound around a same magnetic core, an input end of the power supply connects to a dotted terminal of the first inductor, and the other end of the first inductor connects to the power supply output end, a dotted terminal of the second inductor is grounded through a balanced capacitor, and the other end of the second inductor is connected to the power supply output end; after the power supply is turned on, a voltage of the first inductor and an induced voltage on the second inductor are inverted, and the current that an input voltage of the power supply input end increases on the first inductor and the current that the induced voltage decreases on the second inductor interact with each other, offset to achieve AC ripple rejection.

The balanced capacitor is a non-electrolytic capacitor and the capacitance value ranges from 100 pF to 900 pF.

The inductance of the first inductor used is less than or equal to 470 µH, and setting that a square of a ratio of an inductance of the second inductor to an inductance of the first inductor is equal to a coupling coefficient of the first inductor and the second inductor.

The technical effects of the invention are as follows:
The invention relates to a self-coupled power supply ripple rejection circuit, comprising a coupled inductor (a first inductor and a second inductor), a balanced capacitor, an input capacitor and an output capacitor, a dotted terminal of the first inductor and the one end of the input capacitor are both connected to the power supply input end, a dotted terminal of the second inductor is connected to one end of the balanced capacitor, the other end of the first inductor, the other end of the second inductor, and one end of the output capacitor are all connected to the power supply output end, the other end of the balanced capacitor, the other end of the input capacitor and the other end of the output capacitor are all grounded. The circuit uses a special inductor-coupled inductor to achieve effective filtering, without increasing the volume of inductors of the coupled inductor, and using a common magnetic core winding inductors to achieve efficient self-coupling, and then have a great deal of efficiency in the filtering effect, when the power supply is turned on, the voltage of the first inductor and the induced voltage on the second inductor are inverted, and increasing current of the input voltage of the power supply input end on the first inductor and decreasing current of the induced voltage on the second inductor may offset each other, so that DC power supply can be completely removed by subsequent load and AC ripple can be completely offset, i.e. high reliability and high efficiency of the power supply ripple rejection; and the special inductor can be used even if using an output capacitor with a very small capacitance value, can effectively suppress the power supply ripple, reduce the circuit size, and reduce the circuit loss and product cost; In addition, the circuit uses a balanced capacitor to objectively create a reverse-direction AC. Ripple to offset original ripple to achieve nearly DC power supply output, further achieving high reliability and high efficiency Ripple rejection.

Preferably, the inductance values of the first inductor and the second inductor of the circuit and the capacitance values of the balanced capacitor and the output capacitor may be adjusted according to requirements of actual application, and the balanced capacitor, input capacitor, and output capacitor may use non-electrolytic capacitors with small capacitance values and without electrolyte, the non-electrolytic capacitors meets the requirements of environmental protection and pollution-free; and the use of small capacitors reduces the volume occupied by the capacitors in the circuit, thereby reducing the cost of the product, and at the same time reducing the equivalent resistance of the output capacitor, thus the loss produced when the circuit is charged and discharged is small, effectively reducing the circuit loss.

The invention also relates to a self-coupled power supply ripple rejection method, corresponding to the self-coupled power supply ripple rejection circuit of the present invention. The method uses a coupled inductor and a balanced capacitor to create an inverted AC ripple, and uses the self-coupling technology to realize the AC Ripple suppression, while achieving high reliability and high efficiency power supply ripple suppression, reduces the circuit size, decreases circuit losses, and meets requirements of product cost and environmental pollution-free.

### Description of the drawings

FIG. 1 is a schematic diagram of a traditional power supply ripple rejection circuit.
FIG. 2 is a schematic diagram of a self-coupled power supply ripple rejection circuit according to the invention.

### Description of the preferred embodiments

The invention will be described below with reference to the accompanying drawings.

The invention relates to a self-coupled power supply ripple rejection circuit. The schematic circuit structure thereof is shown in FIG.2, and includes a first inductor L₂, a second inductor L₃, a balanced capacitor C_{b}, an input capacitor Cᵢₙ and an output capacitor Cₒᵤₜ, the first inductor L₂ and the second inductor L₃ are wound around a same magnetic core and coupled to each other so as to form a coupled inductor; a dotted terminal of the first inductor L₂ and one end of the input capacitor Cᵢₙ are both connected to the power supply input end Vᵢₙ, a dotted terminal of the second inductor L₃ is connected to one end of the balanced capacitor C_{b}, the other end of the first inductor L₂, the other end of the second inductor L₃ and one end of the output capacitor Cₒᵤₜ. are all connected to the power supply output end Vₒᵤₜ, the other end of the balanced capacitor C_{b}, the other end of the input capacitor Cᵢₙ and the other end of the output capacitor Cₒᵤₜare all grounded. The circuit uses a special inductor (i.e. coupled inductor formed by the two inductors L₂ and L₃ as shown in Figure 2) to achieve effective filtering without increasing the volume of inductors (i.e. the inductors L₂ and L₃) of the coupled inductor, and the use of a common magnetic core winding inductors L₂ and L₃, the same magnetic core winding can be used to achieve high-efficiency self-coupling of the inductors L₂ and L₃, thereby achieving a very effective filtering effect, that is to achieve high reliability and high efficiency of the power supply ripple rejection; and using this special inductor, even if using an output capacitor (that is, the output capacitor Cₒᵤₜ) with a small capacitance value, can effectively suppress the power supply ripple; In addition, the circuit also uses a balanced capacitor C_{b}, Objectively create a reverse AC ripple to offset original ripple, in order to achieve nearly DC power supply output, and further achieve high reliability and high efficiency power supply ripple rejection.

Preferably, the inductance of the first inductor L₂ of the circuit may not be greater than 470 µH, and the square of the ratio of the inductance of the second inductor L₃ to the inductance of the first inductor L₂ is equal to the coupling coefficient k of the first inductor L₂ and the second inductor L_{3,},viz. (L₃ /L₂)²=k or L₃/L₂ =k^{1/2} ; The non-electrolytic capacitors may be used for the balanced capacitor C_{b}, the input capacitor Cᵢₙ, and the output capacitor Cₒᵤₜ., Does not use electrolytes that are likely to cause environmental pollution, in line with the requirements of environmental protection without pollution; and the capacitance value of the balanced capacitor C_{b} can range from 100pF to 900pF. The capacitance of the output capacitor Cₒᵤₜcan be no more than 10 µF. The capacitance of the input capacitor Cᵢₙ can be neglected. The use of a small capacitor reduces the volume occupied by the capacitor in the circuit, thereby reducing the cost of the product. Moreover the equivalent resistance of the output capacitor Cₒᵤₜis small, so the loss produced when the circuit is charged and discharged is small, which effectively reduces the circuit loss.

The working principle of the self-coupled power supply ripple rejection circuit involved in the present invention is as follows:
When the power supply is powered on, by the power supply input end Vᵢₙ input, the voltage Vᵢₙ increases, the voltage ΔVᵢₙ will increase the current to the inductor L₂, the current growth rate (i.e., current change) is ΔI_{L2} = V_{I} = V_{L2} / L₂ (in the formula V_{I} indicates rate, V_{L2} indicates voltage); in the case of the value of the inductor L₂ is small, the growth rate is large; at the same time, the inductor L₂ will induced a Voltage V_{L3} on the inductor L₃, and V_{L3} and V_{L2} are basically reversed, that is, as shown in FIG. 2 , the voltage V_{(A,B)} between nodes A and B and the voltage V_{(B,C)} between the nodes B and C are reversed, so when the voltage ΔVᵢₙ increases the current on the inductor L₂, the induced voltage V_{L3} will be decreased on the inductor L₃, both can be basically cancelled each other, which leads to a limited increase in the circuit as a whole, that is, ΔI_{L2} = ΔI_{L3} (when k=1 , ΔI_{L2} = ΔI_{L3} ; when k ≠ 1 , ΔI_{L2} = ΔI_{L3} *k), and then I_{L2} =I_{L3} (the same size, opposite direction). Therefore, basically by adjusting values of the inductor L₂ and inductor L₃ (bind coupling coefficient K), the current growth rate (i.e., change) ΔI_{L2} is changed, i.e. decrease from V_{L2}/L₂ to (V_{L2}/ L₂) *1% or less. According to practical applications, the current can be reduced to 1% or to 1 %o easily, and theoretically 0.1 %o to 0.01 %o can also be achieved, but considering the circuit and mass production accuracy, it is generally preferable to achieve a current smaller to 1 %o. When the current growth rate (i.e. change) ΔI_{L2} becomes smaller to 1‰, it means that the equivalent inductor L_{eq1} increases to 1000 times, that is, L_{eq1} =V_{L2} /ΔI_{L21} increases to 1000 times, the increase of the equivalent inductor, improved the circuit filtering effect, and can make the circuit select the non-electrolytic capacitor with smaller capacitance value without affecting the ripple rejection effect.

The input current includes the DC current I_{dc} and the AC current I_{ac}, which can also be understood as the AC ripple I_{ac} being mixed in the DC I_{dc}. After the DC I_{dc} power supply mixed with the AC ripple I_{ac} is powered on, the input current from the power supply input end Vᵢₙ flows into the node A, and then through the inductor L₂ to the node B , through the inductor L₃ to the node C , and I_{L2} =-I_{L3}, and I_{L2} = I_{ac}, so the current of the node B is I_{B} = I_{dc} + I_{L2} + I_{L3} = I_{dc} + I_{ac} -I_{ac} = I_{dc} = I_{Load}, i.e., DC power supply I_{DC} is pumped entirely by the load, the AC ripple I_{ac} is completely cancelled; In addition, when the AC ripple I L₃ through the inductor L₃ to the node C, because of the voltage Vₒᵤₜ at the power supply output end Vₒᵤₜ (that is , a voltage V_{cout} at the output capacitor Cₒᵤₜ) generates a DC component at the balanced capacitor C_{b}, since the integral of I_{Cb} is equal to 0 , V_{cb} is equal to a constant value, That is, the voltage on the balanced capacitor C_{b} will not change substantially, but it will produce jitter at a small amplitude. The balanced capacitor C_{b} in circuit further suppresses the AC ripple of the circuit while enhancing the stability and reliability of the circuit.

The invention also relates to a self-coupled power supply ripple rejection method, which corresponds to the self-coupled power supply ripple rejection circuit of the present invention described above, and can also be understood that the method is a method that implements the self-coupled power supply ripple rejection circuit of the invention. In the method, a coupled inductor is arranged between an input end and an output end of a power supply. The coupled inductor includes a first inductor and a second inductor coupled to each other and wound around a same magnetic core. An input end of the power supply is connected to a dotted terminal of the first inductor, the other end of the first inductor is connected to the power supply output end, a dotted terminal of the second inductor is grounded through a balanced capacitor, and the other end of the second inductor is connected to the power supply output end. Referring to FIG. 2, FIG. 2 can be understood as a hardware circuit diagram implemented through the method of the present invention; when the power supply is turned on, the voltage of the first inductor and the induced voltage on the second inductor are inverted, and increasing current of the input voltage of the power supply input end on the first inductor and decreasing current of the induced voltage on the second inductor may offset each other to achieve AC ripple rejection.

Preferably, the balanced capacitor is a non-electrolytic capacitor and the capacitance value ranges from 100 pF to 900 pF; the inductance of the first inductor used is less than or equal to 470 µH, and setting the square of the ratio of the inductance of the second inductor to the inductance of the first inductor is equal to the coupling coefficient K of the first inductor and the second inductor..

The self-coupled power supply ripple rejection method of the present invention utilizes self-coupling technology to achieve AC ripple suppression. While achieving high reliability and high efficiency power supply ripple suppression, the circuit volume is reduced, circuit loss is reduced, and meets requirements of product cost and environmental pollution-free.

It should be pointed out that the above-mentioned embodiments can make those skilled in the art more fully understand the invention, but do not limit the invention in any way. Therefore, although the present specification has been described in detail with reference to the accompanying drawings and embodiments, it should be understood by those skilled in the art that the invention can still be modified or equivalently replaced. In short, everything does not depart from the invention. The spirit and scope of the technical solutions and their improvements shall all be covered by the protection scope of the invention-creating patent.

## Claims

1. A self-coupled power supply ripple rejection circuit comprising a coupled inductor, a balanced capacitor, an input capacitor and an output capacitor, the coupled inductor comprises a first inductor and a second inductor coupled to each other and wound around a same magnetic core, a dotted terminal of the first inductor and one end of the input capacitor are both connected to a power supply input end, a dotted terminal of the second inductor is connected to one end of the balanced capacitor, and the other end of the first inductor, the other end of the second inductor and one end of the output capacitor are all connected to the power supply output end, and the other end of the balanced capacitor, the other end of the input capacitor and the other end of the output capacitor are all grounded.

2. The power supply ripple rejection circuit of claim 1, wherein the inductance of the first inductor is less than or equal to 470 µH.

3. The power supply ripple rejection circuit according to claim 1 or 2, wherein a square of a ratio of an inductance of the second inductor to an inductance of the first inductor is equal to a coupling coefficient of the first inductor and the second inductor.

4. The power supply ripple rejection circuit according to claim 1, wherein the balanced capacitor, the input capacitor and the output capacitor are all non-electrolytic capacitors.

5. The power supply ripple rejection circuit according to claim 4, wherein a capacitance of the balanced capacitor ranges from 100 pF to 900 pF.

6. The power supply ripple rejection circuit according to claim 4, wherein a capacitance of the output capacitor is less than or equal to 10 µF.

7. A self-coupled power supply ripple rejection method, **characterized in that** a coupled inductor is arranged between an input end and an output end of a power supply, and the coupled inductor includes a first inductor and a second inductor coupled to each other and wound around a same magnetic core, an input end of the power supply connects to a dotted terminal of the first inductor, and the other end of the first inductor connects to the power supply output end, a dotted terminal of the second inductor is grounded through a balanced capacitor, and the other end of the second inductor is connected to the power supply output end; after the power supply is turned on, a voltage of the first inductor and an induced voltage on the second inductor are inverted, and the current that an input voltage of the power supply input end increases on the first inductor and the current that the induced voltage decreases on the second inductor interact with each other, offset to achieve AC ripple rejection.

8. The power supply ripple rejection method according to claim 7, wherein the balanced capacitor is a non-electrolytic capacitor and the capacitance value ranges from 100 pF to 900 pF.

9. The power supply ripple rejection method according to claim 7 or 8, wherein the inductance of the first inductor used is less than or equal to 470 µH, and setting that a square of a ratio of an inductance of the second inductor to an inductance of the first inductor is equal to a coupling coefficient of the first inductor and the second inductor.
